Europäisches Patentamt

European Patent Office

Office européen des brevets

(11) Veröffentlichungsnummer: **0 281 885 B1**

## (12) EUROPÄISCHE PATENTSCHRIFT

(45) Veröffentlichungstag der Patentschrift: **23.09.92**

(21) Anmeldenummer: **88102994.6**

(22) Anmeldetag: **29.02.88**

Teilanmeldung 91102318.2 eingereicht am 29/02/88.

(51) Int. Cl.5: **A01C 17/00**

(54) **Schleuderdüngerstreuer.**

(30) Priorität: **06.03.87 DE 3707188**
**29.05.87 DE 3718145**
**05.09.87 DE 3729871**
**23.10.87 DE 3735896**

(43) Veröffentlichungstag der Anmeldung:
**14.09.88 Patentblatt 88/37**

(45) Bekanntmachung des Hinweises auf die
Patenterteilung:
**23.09.92 Patentblatt 92/39**

(84) Benannte Vertragsstaaten:
**BE DE ES FR GB IT NL SE**

(56) Entgegenhaltungen:
**EP-A- 0 017 128**     **EP-A- 0 158 335**
**DE-U- 1 778 378**     **DE-U- 8 705 447**
**FR-A- 826 901**       **FR-A- 2 450 551**

(73) Patentinhaber: **Amazonen-Werke H. Dreyer GmbH & Co. KG**
**Am Amazonenwerk 9-13**
**W-4507 Hasbergen-Gaste(DE)**

(72) Erfinder: **Dreyer, Heinz, Dipl.-Ing. Univ. Dr. agr.**
**Am Amazonenwerk 7**
**W-4507 Hasbergen(DE)**

(74) Vertreter: **Patentanwälte Grünecker, Kinkeldey, Stockmair & Partner**
**Maximilianstrasse 58**
**W-8000 München 22(DE)**

EP 0 281 885 B1

## Beschreibung

Die Erfindung betrifft einen Schleuderdüngerstreuer zum Verteilen von Düngemitteln und dgl. gemäß des Oberbegriffes des Anspruches 1.

Ein derartiger Schleuderdüngerstreuer ist bereits durch die DE-OS 29 08 949 bekannt. Dieser Schleuderdüngerstreuer weist Schleuderscheiben auf, bei denen die Wurfschaufeln nach Skalen einstellbar sind. Zunächst ist bei diesem Schleuderstreuer von Nachteil, daß jeweils nur gleichlange Wurfschaufeln vorgesehen sind, so daß kein ausreichend genaues Streubild erzielt werden kann, dieses vor allem bei großen Arbeitsbreiten. Darüber hinaus erfolgt jeweils eine genau abgestimmte Verstellung der Abwurfwinkel in aufrechter wie in horizontaler Ebene. Diese Einstellung ist für den Landwirt verwirrend, weil er jeweils genau darauf achten muß, daß er jeweils an einer Schaufel zwei Einstellungen in der vorgeschriebenen Weise vornehmen muß. Dieses kann er sehr leicht zu Verwechselungen führen. Die Skalen sind bei dieser Schleuderscheibe im Bereich der Wurfschaufel angeordnet. In welcher Weise diese Skalen ausgebildet sind, ob sie erhöht oder in anderer Weise angebracht oder nur mittels Farbgebung auf die Schleuderscheiben aufgebracht sind, ist dieser Druckschrift nicht entnehmbar.

Der Erfindung liegt daher die Aufgabe zugrunde, den bekannten Schleuderdüngerstreuer für den praktischen Gebrauch wesentlich zu verbessern,

Die Aufgabe wird bei einer gattungsgemäßen Vorrichtung durch die kennzeichnenden Merkmale des Anspruchs 1 gelöst. Infolge dieser Maßnahme wird das Streubild nicht unkontrollierbar gestört wird und die Körner werden weich in die Wurfschaufel eingeführt, so daß keine Spritzverluste entstehen.

Um die Einstellung der Wurfschaufeln auf den Schleuderscheiben für die entsprechende Arbeitsbreite wirklich narrensicher und präzise zugestalten ist erfindungsgemäß vorgesehen, daß die Symbole für die Markierungen oder Wurfschaufeln jeder Schleuderscheibe unterschiedliche und unverwechselbar sind. Somit erfolgt eine eindeutige Zuordnung der Markierungselemente zu jeder Wurfschaufel, so daß Verwechselungen überhaupt nicht mehr vorkommen können. Der Landwirt entnimmt seiner Streutabelle die jeweilige Einstellung für die Wurfschaufel und stellt sie dann ein, denn den meisten Einstellflächen werden die langen und die kurzen Wurfschaufeln mit unterschiedlichen Winkeln in der Scheibenebene eingestellt. Daher ist eine eindeutige Zuordnung der Skalen und -bezeichnungen sehr wichtig.

Eine unverwechselbare Einstellung der in verschiedenen Positionen der auf den Schleuderscheiben eines Schleuderdüngerstreuers befestigbaren Wurfschaufeln wird in bevorzugrer Weise dadurch gewährleistet, daß zumindest zwei Wurfschaufeln auf jeder Schleuderscheibe angeordnet sind, daß sich für jede Wurfschaufel bei Einstellung des horizontalen Abwurfwinkels die Markierungselemente auf der Schleuderscheibe befinden, welche unterschiedlich ausgebildet und/oder unterschiedlich bezeichnet sind und zwar derart, daß die Markierungspunkte eindeutig und unverwechselbar jeweils einer Wurfschaufel zugeordnet sind.

Infolge dieser Maßnahmen ist es nun dem Benutzer der in erfindungsgemäßer Weise ausgerüsteten Schleuderdüngerstreuer möglich, entsprechend den jeweiligen vorherrschenden Einsatzbedingungen, d.h., der gewünschten Arbeitsbreite und unter Berücksichtigung der Streuguteigenschaften des auszustreuenden Materials, eine exakte, den jeweils gewünschten Einsatzverhältnissen entsprechende Einstellung der auf den Schleuderscheiben angeordneten Wurfschaufeln anhand der Streutabelle vorzunehmen, und eine gleichmäßige Verteilung der Düngemittel zu erreichen, sowie ein optimales Streubild zu erzeugen. Der Benutzer kann also die aus der Streutabelle entnommenen Einstelldaten nicht mehr vertauschen, d.h. einer falschen Wurfschaufel zuordnen, da dieser Einstellwert unverwechselbar nur auf einer Skala auftaucht und es nicht zu einem Übertragen des aus der Streutabelle entnommenen Wertes auf eine mit der anderen Wurfschaufel zusammenwirkenden Skala möglich ist.

Um ein Verwechseln der der Streutabelle entnommenen Einstelldaten zu verhindern, die zu einer fehlerhaften Einstellung einer Wurfschaufel führen könnten, ist erfindungsgemäß vorgesehen, daß für die jeder Wurfschaufel zugeordneten Markierungselemente zum Einstellen der Wurfschaufeln andere Bezeichnungen oder Symbole gewählt werden.

Damit nicht für jeden Einsatzfall, d.h., für das "Normal-, Breit-, und Grenzstreuen" jeweils spezielle Schleuderscheiben mit entsprechenden Skalen hergestellt werden müssen, ist weiterhin erfindungsgemäß vorgesehen, daß die Skalen in Aussparungen, welche sich in den Schleuderscheiben befinden, angeordnet sind, und daß die weiterhin vorgesehen, daß die Skalen an ihren einander gegenüberliegenden Stirnseiten jeweils durch die Aussparungen fassende Halterungen aufweisen, während die Längsseiten unter die Schleuderscheibe fassende Streifen aufweisen. Hierdurch lassen sich die als Einsatzstücke ausgebildeten Skalen auf einfachste Weise an den Schleuderscheiben befestigt, wobei es möglich ist, die für den jeweiligen Einsatzfall, d.h., für das Normal-, Breit-, oder Grenzstreuen benötigten Skalen gegeneinander austauschen. Hierdurch ist es möglich, an ein und derselben Schleuderscheibe verschiedenartig ausgebildete Wurfschaufeln je nach vorliegendem Einsatzfall zu befestigen.

Weiterhin ist erfindungsgemäß vorgesehen, daß unterhalb der Skalen und der Schleuderscheibe mit der Wurfschaufel verschwenkbare Halteelemente angeordnet sind. Hierdurch werden die von unten in die Aussparungen der Schleuderscheiben eingesetzten Skalen in besonders einfacher Weise zusätzlich gehalten und abgestützt.

Um das exakte Einstellen der auf der Schleuderscheibe winkelverschwenkbar angeordneten Wurfschaufeln genau nach den Angaben einer Streutabelle vornehmen zu können, befinden sich die Markierungen bzw. die Skala für das Winkelverschwenken der Wurfschaufeln auf der Schleuderscheibe in dem Bereich deren äußeren Randes, wobei die auf der Schleuderscheibe aufliegende Kante der jeweiligen Wurfschaufel als Zeiger mit den Markierungen bzw. der Skala zusammenwirken kann.

Zur unverwechselbaren, anhand einer Streutabelle durchgeführten Einstellung der längenveränderbaren und winkelverschwenkbaren Wurfschaufeln auf den Schleuderscheiben, sind die den jeweiligen Einstellmechanismen zugeordneten Skalen unterscheidbar gekennzeichnet oder bezeichnet, wobei die jeweilige Skala in einer Verriefung angordnet ist. Diese Vertiefung ist in den oberen Schenkel der Wurfschaufel eingeprägt. Die Schleuderscheibe weist ebenfalls eine eingeprägte Vertiefung zur Anordnung der Skala auf. In diese Vertiefungen kann die jeweilige Skala eingeklebt oder anderweitig befestigt sein.

Weitere Einzelheiten der Erfindung sind der Beispielsbeschreibung und den Zeichnungen zu entnehmen. Hierbei zeigen

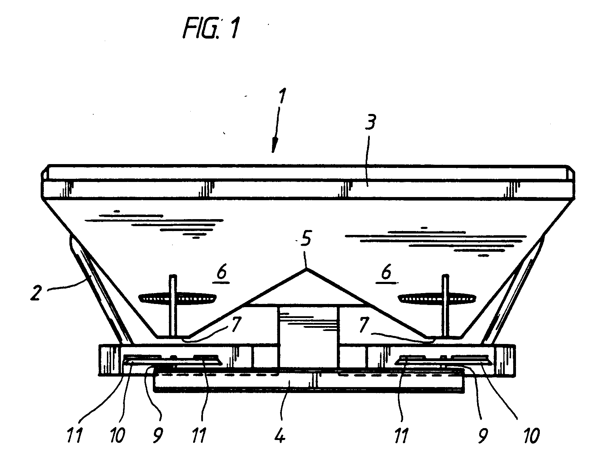

Fig. 1    den in erfindungsgemäßer Weise ausgebildeten Schleuderdüngerstreuer in der Ansicht von hinten,

Fig. 2    die linke Schleuderscheibe mit den erfindungsgemäßen Wurfschaufeln für das "Normalstreuen" in der Draufsicht und vergrößertem Maßstab,

Fig. 3    die erfindungsgemäße rechte Schleuderscheibe,

Fig. 4    Teilansicht der linken Schleuderscheibe mit einer erfindungsgemäßen Wurfschaufel für das "Normalstreuen" in der Draufsicht und vergrößertem Maßstab,

Fig. 5    die Wurfschaufel gemäß Fig. 4 in der Ansicht V - V,

Fig. 6    eine andere linke Schleuderscheibe mit erfindungsgemäßen Wurfschaufeln für das "Normalstreuen",

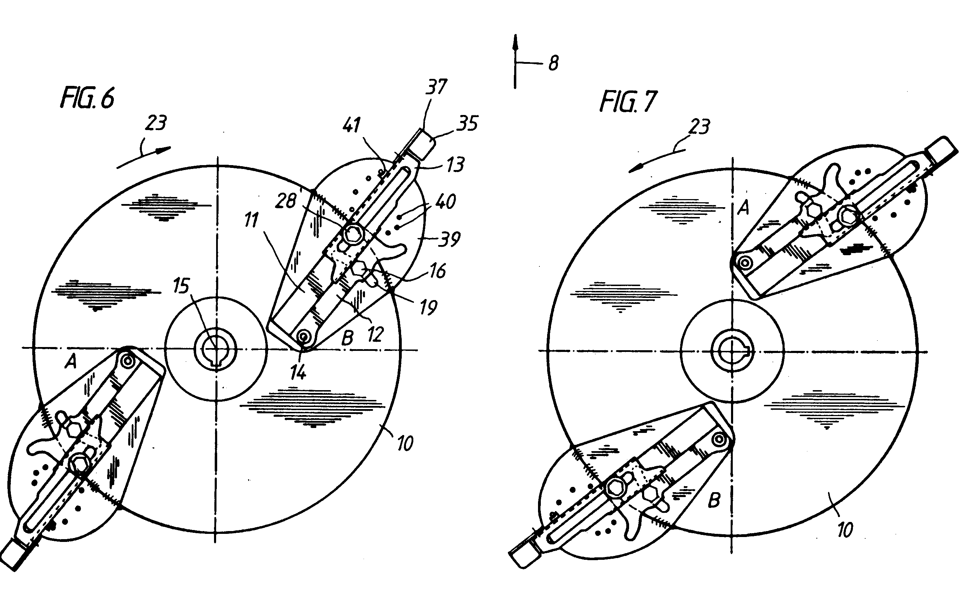

Fig. 7    die erfindungsgemäße rechte Schleuderscheibe,

Fig. 8    die linke Schleuderscheibe mit den erfindungsgemäßen Wurfschaufeln für das "Grenzstreuen",

Fig. 9    die erfindungsgemäße rechte Schleuderscheibe,

Fig. 10    Teilansicht der linken Schleuderscheibe mit einer erfindungsgemäßen Wurfschaufel für das "Grenzstreuen" in der Draufsicht und vergrößertem Maßstab,

Fig. 11    die Wurfschaufel gemäß Fig. 10 in der Ansicht XI - XI,

Fig. 12    die Wurfschaufel gemäß Fig. 10 in der Ansicht XII - XII,

Fig. 13    das Schleuderscheibenpaar für die "größeren" Arbeitsbreiten in der Draufsicht,

Fig. 14    das Schleuderscheibenpaar für die "kleineren" Streubreiten in der Daufsicht,

Fig. 15    die erfindungsgemäße linke Grenzstreuscheibe,

Fig. 16    die erfindungsgemäße rechte Grenzstreuscheibe,

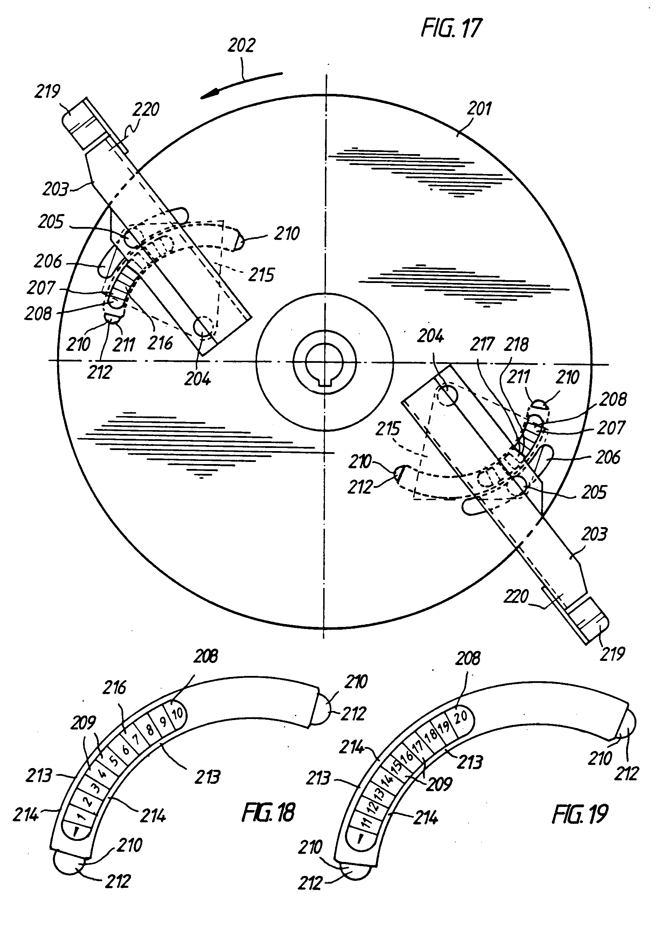

Fig. 17    die rechte Schleuderscheibe mit winkelverschwenkbaren Wurfschaufeln für das "Normalstreuen" in der Draufsicht,

Fig. 18    die der einen Wurfschaufel zugeordneten Einstellskala in der Draufsicht und vergrößertem Maßstab,

Fig. 19    die der anderen Wurfschaufel zugeordnete Einstellskala in der Daufsicht und vergrößertem Maßstab,

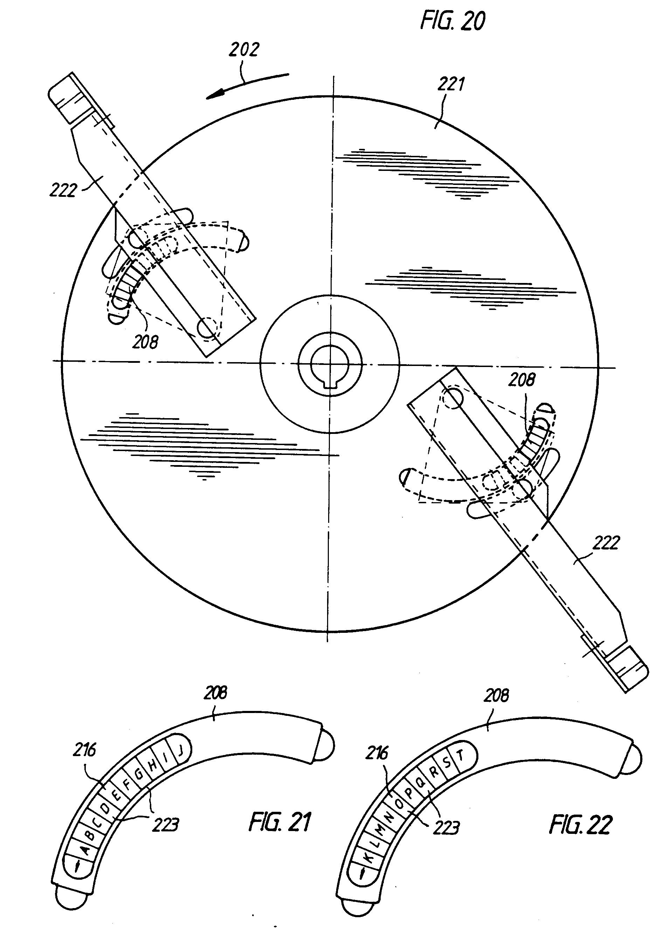

Fig. 20    die in erfindungsgemäßer Weise ausgerüstete rechte Schleuderscheibe mit winkelverschwenkbaren Wurfschaufeln für das "Breitstreuen" in der Draufsicht,

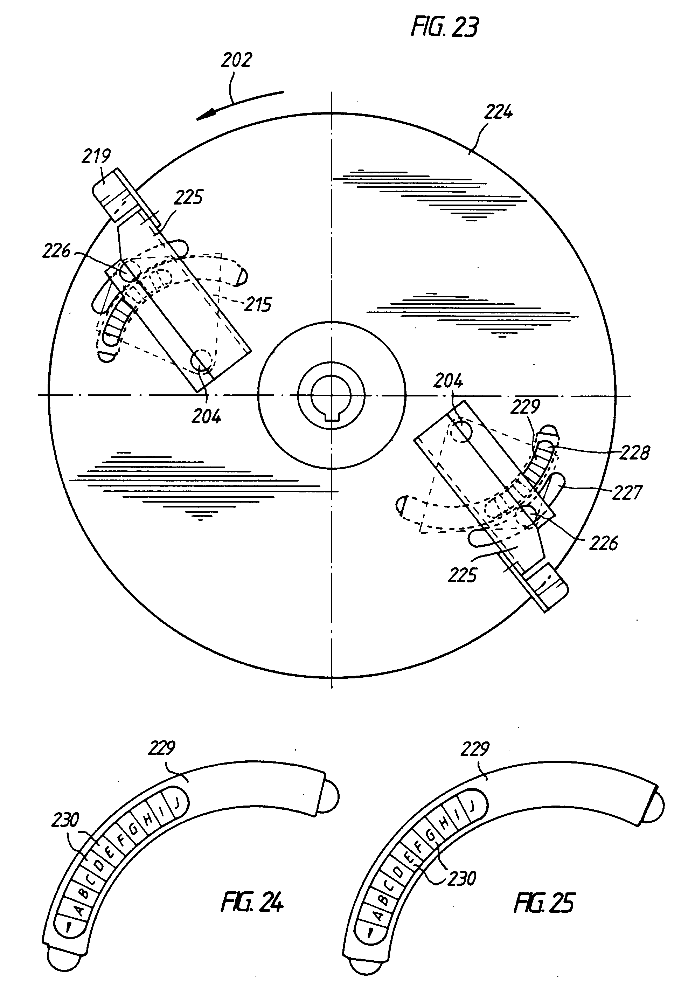

Fig. 21    die Einstellskala für die eine Wurfschaufel der "Breitstreuscheibe" in Draufsicht und vergrößertem Maßstab,

Fig. 22    die andere Einstellskala der "Breitstreuscheibe" in der Draufsicht und vergrößertem Maßstab,

Fig. 23    die in erfindungsgemäßer Weise ausgerüstet rechte Schleuderscheibe mit den Wurfschaufeln für das "Grenzstreuen" in der Draufsicht,

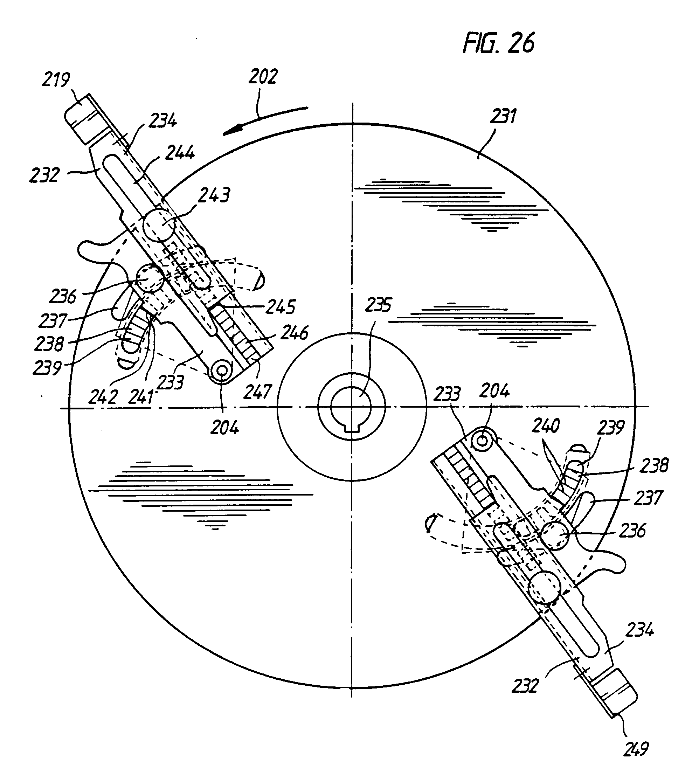

Fig. 24    die Einstellskala für die eine Wurfschaufel der "Grenzstreuscheibe" in Draufsicht und vergrößertem Maßstab,

Fig. 25    die andere Einstellskals der "Grenzstreuscheibe" in der Draufsicht und vergrößertem Maßstab,

Fig. 26    die rechte Schleuderscheibe mit winkelverschwenkbaren und teleskopartig ausgebildeten Wurfschaufeln für das "Normal- und Breitstreuen" in der Draufsicht,

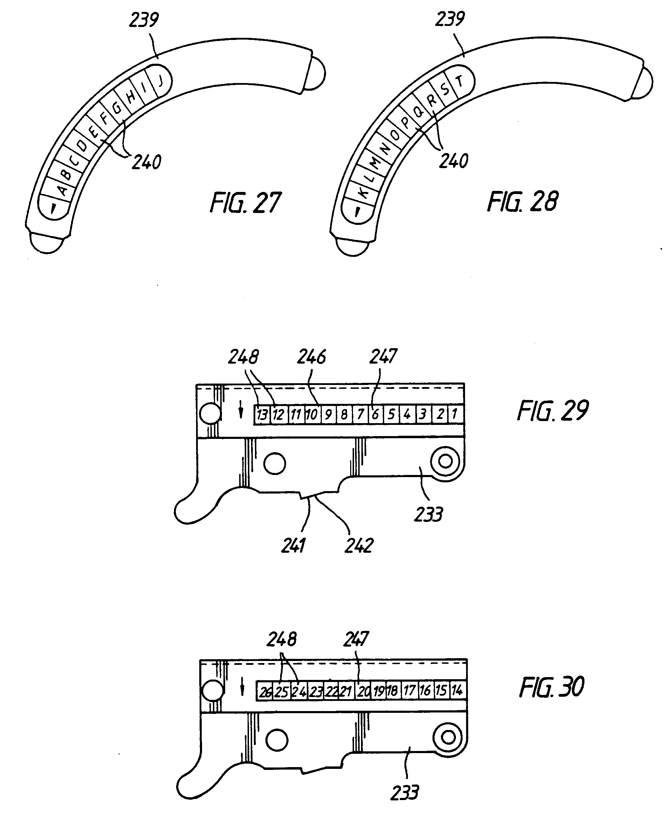

Fig. 27 in in erfindungsgemäßer Weise ausgebildete Einstellskala für die eine Wurfschaufeln der Schleuderscheibe gemäß Fig. 26 in der Draufsicht und vergrößertem Maßstab,

Fig. 28 die andere erfindungsgemäß ausgebildete Einstellskala für die andere Wurfschaufel der Schleuderscheibe gemäß Fig. 26 in der Draufsicht und vergrößertem Maßstab,

Fig. 29 der innere Teil der verschwenkbaren, teleskopartig ausgebildeten Wurfschaufel der Schleuderscheibe gemäß Fig 26 mit der in erfindungsmäßer Weise ausgebildeten Einstellskala in der Draufsicht und vergrößertem Maßstab,

Fig. 30 der verschwenkbare innere Teil der anderen teleskopartig ausgebildeten Wurfschaufel der Schleuderscheibe gemäß Fig. 26 mit der in erfindungsgemäßer Weise ausgebildeten Einstellskala in der Draufsicht und vergrößertem Maßstab,

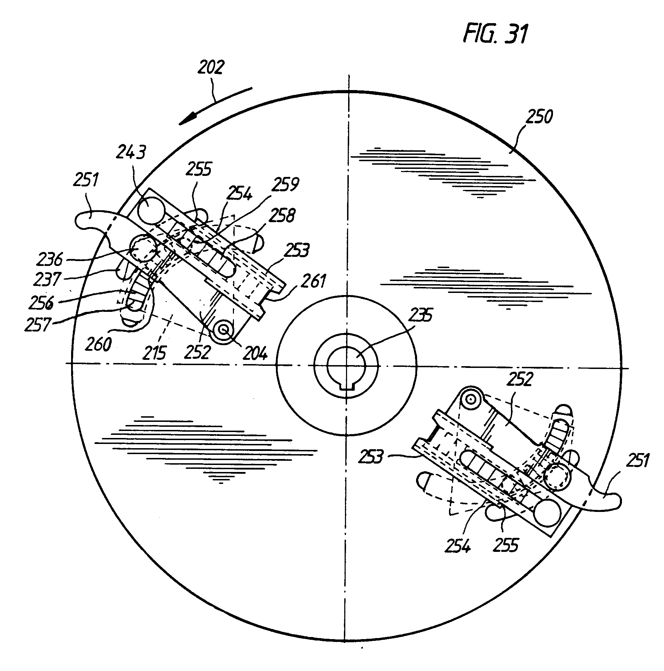

Fig. 31 die rechte Schleuderscheibe mit winkelverschwenkbaren und teleskopartig ausgebildeten Wurfschaufeln für das "Grenzstreuen" in der Draufsicht,

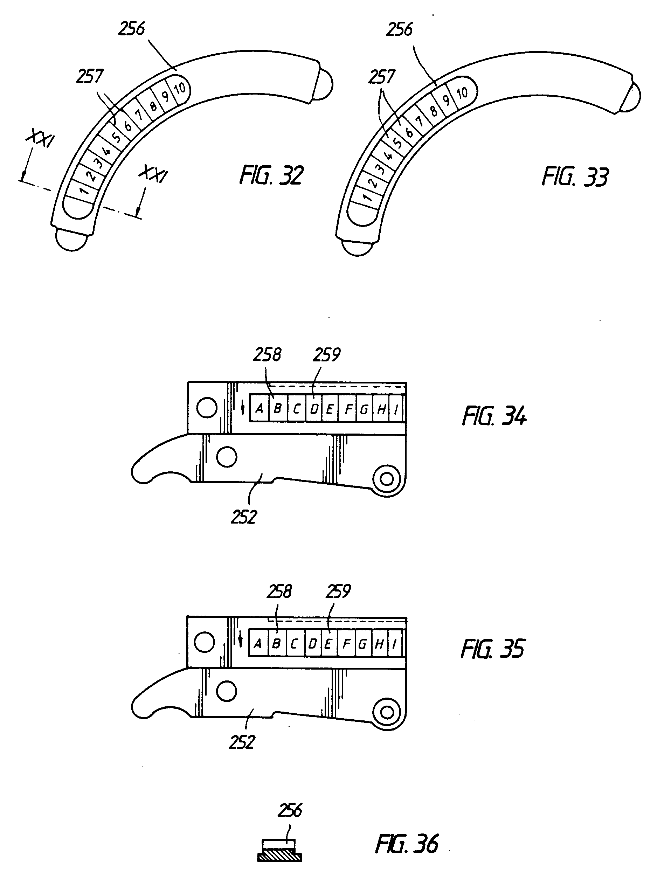

Fig. 32 die in erfindungsgemäßer Weise ausgebildete Einstellskala der einen Wurfschaufel der "Grenzstreuscheibe mit den teleskopartig ausgebildeten Wurfschaufeln gemäß Fig. 31,

Fig. 33 die in erfindungsgemäßer Weise ausgebildete Einstellskala der "Grenzstreuscheibe" gemäß Fig. 31,

Fig. 34 das innere Teil der verschwenkbaren, teleskopartig ausgebildeten Wurfschaufel für das "Grenzstreuen" mit der erfindungsgemäßen Einstellskala in der Draufsicht und vergrößertem Maßstab,

Fig. 35 das andere innere, verschwenkbare Teil der teleskopartig ausgebildeten Wurfschaufel der "Grenzstreuscheibe" gemäß Fig. 31 mit der erfindungsgemäßen Einstellskala in der Draufsicht und vergrößertem Maßstab und

Fig. 36 die Einstellskala gemäß Fig. 32 in der Ansicht XXI - XXI.

Der Schleuderdüngerstreuer 1 ist mit dem Rahmen 2 ausgestattet, an dem der Vorratsbehälter 3 und ein Winkelgetriebe 4 angebracht sind. Hierbei ist der untere Bereich des Vorratsbehälters 3 durch ein dachförmiges Mittelteil 5 in zwei Auslauftrichter 6 unterteilt, in deren Bodenplatten 7 sich nicht näher dargestellte, bekannte Auslauföffnungen befinden. Diese Auslauföffnungen sind mit Hilfe von schieberförmigen Dosierelementen für sich verschließbar und in unterschiedlichen Öffnungsweiten einstellbar.

Unterhalb der Auslauföffnungen sind quer zur Fahrtrichtung 8 auf den Ausgangswellen 9 des Winkelgetriebes 4 die Schleuderscheiben 10 nebeneinander angeordnet. Auf diesen Schleuderscheiben 10 sind jeweils zwei Wurfschaufeln 11 befestigt. Die Befestigung der Schleuderscheiben 10 auf den Ausgangswellen 9 des Winkel- getriebes 4 ist derart ausgebildet, daß sich die Schleuderscheiben 10 vorzugsweise werkzeuglos von diesen Ausgangswellen 9 montieren bzw. demontieren lassen.

Den einzelnen Schleuderscheiben 10 wird das sich im Vorratsbehälter 3 des Schleuderdüngerstreuers 1 befindliche Düngemittel in genau einstellbaren Mengen zugeführt. Die rotierenden Schleuderscheiben 10 verteilen den auf die jeweilige Schleuderscheibe 10 auftreffenden Düngemittelstrom gleichmäßig über die genau einstellbare Arbeitsbreite S des Schleuderdüngerstreuers 1.

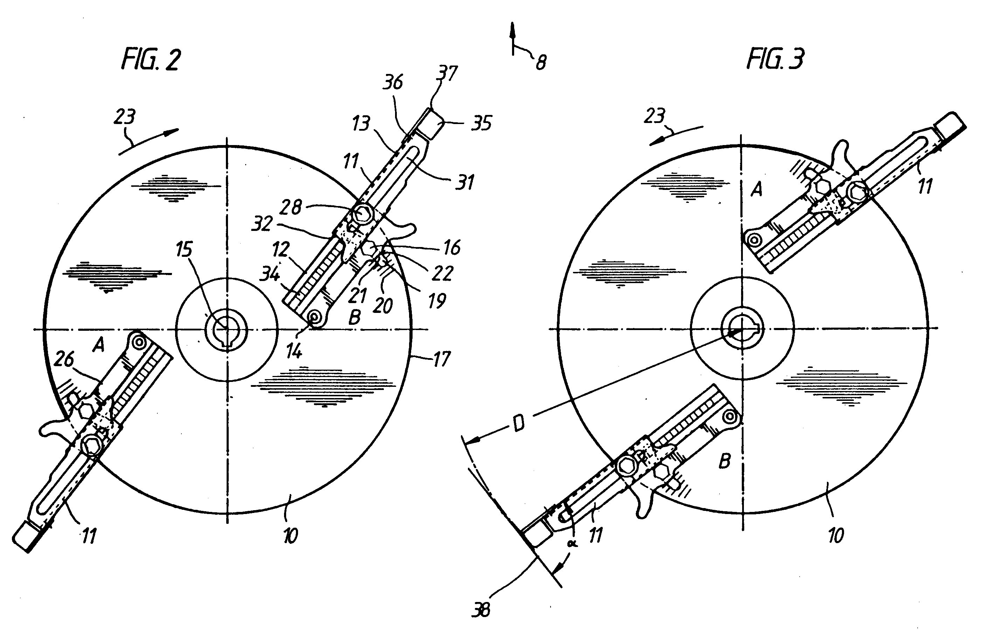

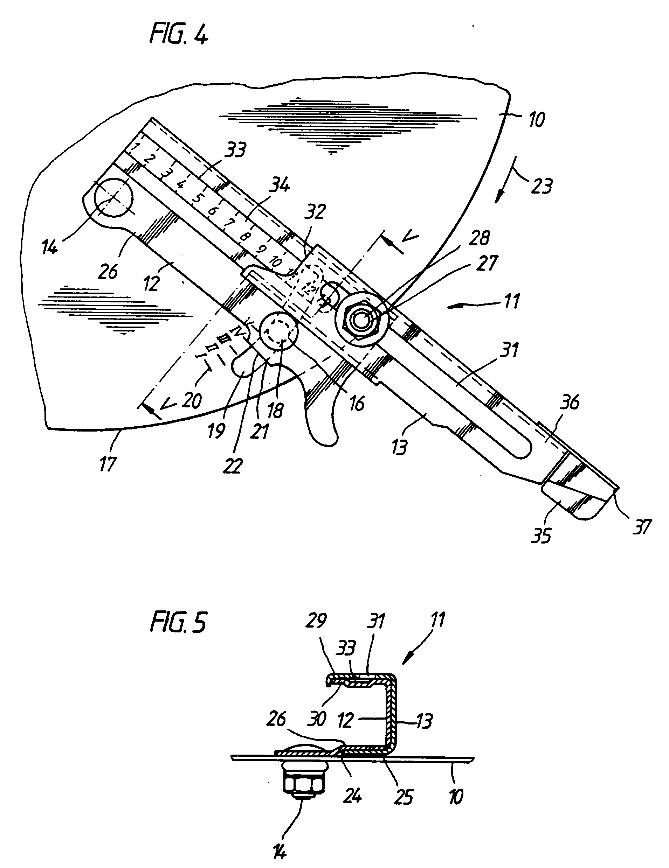

Die Fig. 2 und 3 zeigen die nebeneinander angeordneten Schleuderscheiben 10 mit den jeweils auf diesen Schleuderscheiben 10 angeordneten Wurfschaufeln 11. Bei diesen Wurfschaufeln 11 handelt es sich um relativ lange Wurfschaufeln, die für das sog. "Normalstreuen" vorgesehen sind. Die jeweiligen Wurfschaufeln 11 bestehen aus den zwei teleskopartig in Längsrichtung der Wurfschaufel 11 zueinander verschiebbaren und in verschiedenen Längen der Wurfschaufel 11 festsetzbaren Teile 12 und 13. Diese Wurfschaufeln 11 sind derart ausgebildet, daß der innere Teil 12 der Wurfschaufel 11 in radialer Richtung unverschiebbar ist. Diese längenveränderbaren Wurfschaufeln 11 sind jeweils winkelverschwenkbar auf der Schleuderscheibe 10 angeordet. Hierbei befindet sich die Schwenkachse 14 einer jeden Wurfschaufel 11 in der der Rotationsachse 15 der jeweiligen Schleuderscheibe 10 zugewandten Hälfte des inneren Teiles 12 der Wurfschaufel 11. Der Festsetzmechanismus 16 der winkelverschwenkbaren Schaufel 11 befindet sich in der dem äußeren Rand 17 der Schleuderscheibe 10 zugewandten Hälfte des inneren Teiles 12 der Wurfschaufel 11. Dieser Festsetzmechanismus 16 ist beispielsweise als lösbare Schraube 18 ausgebildet und wirkt mit dem sich in der Schleuderscheibe 10 befindlichen Langloch 19 zusammen. Im Bereich dieses Langloches 19 sind die Markierungen 20 gut sichtbar angeordnet und stellen die verschiedenen Positionen dar, in denen die winkelverschwenkbaren Wurfschaufeln 11 einstellbar sind. Hierzu wirkt die auf der Schleuderscheibe 10 aufliegende Kante 21 des inneren Teiles 12 der jeweiligen Wurfschaufel 11 als Zeiger 22 mit den auf der Schleuderscheibe 10 angeordneten Markierungen 20 zusammen. Zum Winkelverschwenken der Wurfschaufeln 11 ist es selbstverständlich auch möglich, das Langloch 19 durch einzelnen, die jeweiligen Winkelstellungen der Wurfschaufel 10 repräsentierende einzelne Löcher auszubilden. Die beiden Teile 12 und 13 der Wurfschaufel 11 weisen eine U-förmigen Querschnitt auf, wobei sich der an dem inneren Teil 12 anschließende äußere Teil 13 der Wurfschaufel 11 eine der Außenkontur der Innenschaufel 12 entsprechende Innenkontur aufweist und in Drehrichtung 23 der Schleuderscheiben 10 gesehen hinter der Innenschaufel 12 angeordnet ist. Um einen freien Raum 24 für den unteren Schenkel 25 des verschiebbaren äußeren Teiles 13 zu schaffen, ist die Innenschaufel 12 über einen Teil ihrer Tiefe zur Schaffung dieses freien Raumes 24 durchgekröpft.

Die jeweilige Lage des inneren Teiles 12 und des äußeren Teiles 13 der Wurfschaufel 11 zueinander wird mittels des als Schraubverbindung 27 ausgebildeten Festsetzmechanismusses 28 bestimmt. Dieser Festsetzmechanismus 28 zum Festsetzen der zueinander in Längsrichtung der Wurfschaufel 11 verschiebbaren Teile 12 und 13 ist zwischen den oberen Schenkeln 29 und 30 der zueinander verschiebbaren Teile 12 und 13 angeordnet. Das äußere Teil 13 weist das Langloch 31 auf und ist somit stufenlos gegenüber dem inneren Teil 12 verstellbar. Die Kante 32 des ausziehbaren äußeren Teiles 13 wirkt mit der in der Tiefung 33 des oberen Schenkels 30 des inneren Teiles 12 angeordnent Skala 34 zusammen. An dem verschiebbaren äußeren Teil 13 der Wurfschaufel 11 ist ein weiteres als sog. Schwenkschaufel ausgebildetes Teil 35, welches um die Schwenkachse 36 in aufrechter Ebene schwenkbar ist, befestigt. Dieses Teil 35 läßt sich in zwei verschiedene Positionen arretieren, so daß sich die Flugkurve der von den Wurfschaufeln verteilten Düngemittelpartikel verändern läßt, so daß sich diese Wurfschaufeln sowohl für das "Normalstreuen" und für die sog. Spätdüngung verwenden lassen.

Damit die verschiedenen handelsüblichen Düngersorten exakt und in der gewünschten Arbeitsbreite verteilt werden können, lassen sich die auf den Schleuderscheiben angeordneten Wurfschaufeln individuell für die jeweils auszustreuende Düngersorte einstellen. Dieses Einstellen der Wurfschaufeln erfolgt nach den Angaben einer Streutabelle. Hierzu sind die auf einer Schleuderscheibe 10 befestigten Wurfschaufeln 11 beispielsweise mit den Buchstaben A und B gekennzeichnet. Soll jetzt beispielsweise der Dünger über eine Arbeitsbreite von 15 m ausgebracht werden, so sind in der Streutabelle beispielsweise die Angaben:

A II und 8

B III und 6

angegeben. Nun ist dem Landwirt bekannt, daß der die mit A gekennzeichnete Wurfschaufel 11 derart verschwenken muß, daß die Kante 21 mit der mit II gekennzeichneten Markierung 20 deckungsgleich ist. In dieser Position wird der Festsetzmechanismus 16 befestigt. Zur Erleichterung der Einstellung der verschiedenen Positionen läßt sich die Schraubverbindung 18 beispielsweise mit einer Flügelmitter versehen. Als nächstes löst der Landwirt den Festsetzmechanismus 28, der beispielsweise auch aus zwei nebeneinander angeordneten Schraubverbindung bestehen kann und verschiebt das äußere Teil 13 gegenüber dem inneren Teil 12 der Wurfschaufel 11 solange, bis die Kante 32 des äußeren Teiles 13 deckungsgleich mit der auf der Skala 34 angebrachten Ziffer 8 ist. In dieser Stellung wird das äußere Teil 13 der Wurfschaufel 11 mittels des als Schraubverbindung 27 ausgebildeten Festsetzmechanismusses 28 arretiert.

Nun wird die mit B gekennzeichnete Wurfschaufel 11 entsprechend den Angaben der Streutabelle eingestellt. Diese Einstellung erfolgt in der bereits beschriebenen Weise. Mittels dieser winkelverschwenkbar auf der jeweiligen Schleuderscheibe 10 angeordneten teleskopartig ausgebildeten Wurfschaufeln 11 läßt sich der Abstand D der Abstreukante 37 und der jeweilige horizontale Abstellwinkel ..... zwischen der Wurfschaufel 11 und der an der Stelle ihrer Abstreukante 37 an ihrer Umlaufbahn in Drehrichtung angelegten Tangente exakt einstellen. Hierdurch ist es möglich, alle handelsüblichen Düngersorten gleichmäßig unter Berücksichtigung ihrer jeweiligen Streuguteigenschaften über die genau einstellbaren Arbeitsbreiten zu verteilen.

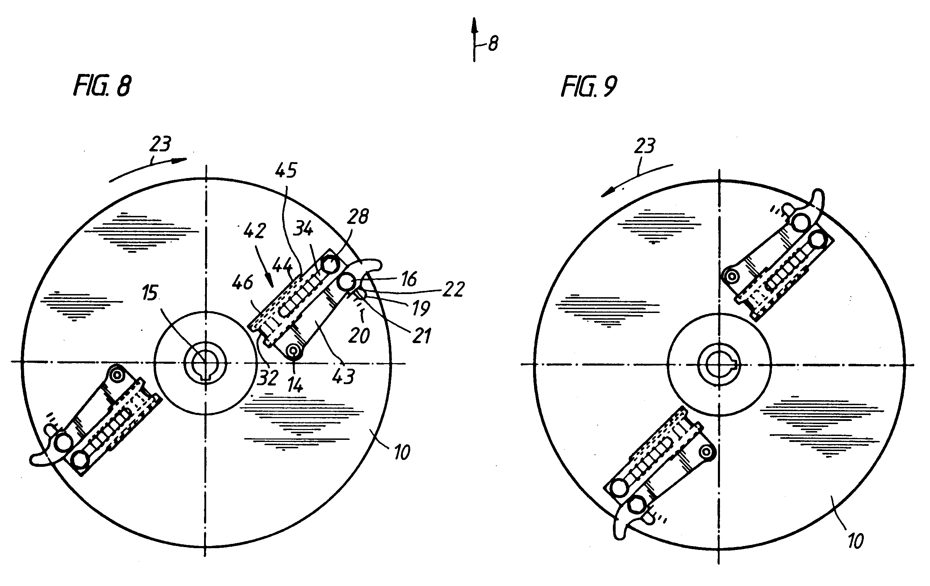

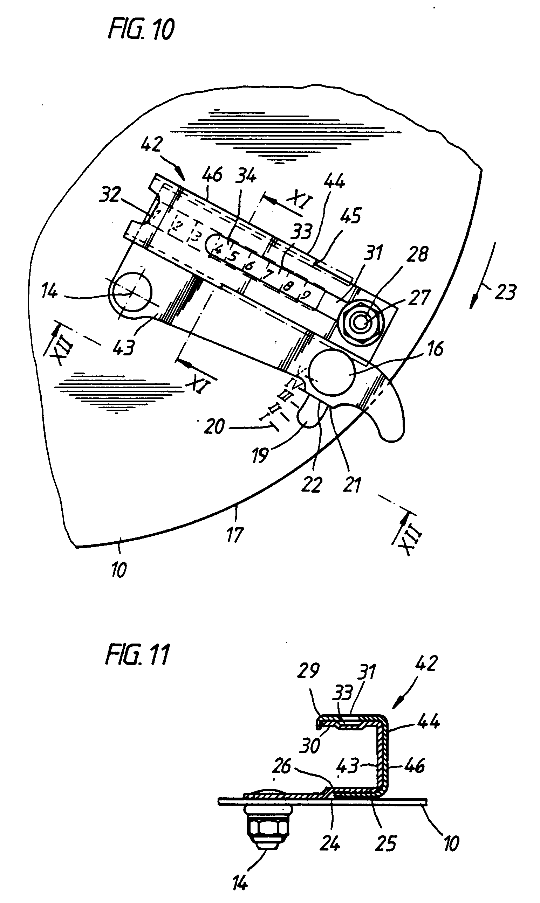

Das Einstellen des Abstandes der jeweiligen Abstreukante 37 einer Wurfschaufel 11 und das Einstellen des Anstellwinkels ..... läßt sich auch durch an den Schleuderscheiben 10 angeordneten Zusatzeinrichtungen 39, die mit unterschiedlichen, die einzelnen Einstellungen repräsentierenden Markierungslöchern 40 versehen sind. Der an dem äußeren Teil 13 angeordnete Zeiger 41 ist hierbei entsprechend den Angaben einer Streutabelle mit den unterschiedlich gekennzeichneten Löchern in Deckungsgleichheit zu bringen. Die einzelnen Löcher 40 geben die verschiedenen Positionen der jeweiligen Wurfschaufeln 11 an. Die Fig. 8 und 9 zeigen jeweils auf den Schleuderscheiben 10 angeordnete, kürzere Wurfschaufeln 11, mit denen das sog. "Grenzstreuen" durchgeführt werden kann. Diese Grenzstreuwurfschaufeln 42 unterscheiden sich nur in der Ausbildung des verschiebbaren äußeren Teiles 13, daß bei diesen sog. Grenzstreuwurfschaufeln 43 wesentlich kürzer ist als das äußere Teil 13 der in den vorhergehenden Fig. beschriebenen Wurfschaufeln. Das innere Teil 43 der Grenzstreuwurfschaufel 42 unterscheidet sich nur hinsichtlich eines verkürzten Rückenteiles 44 von dem inneren Teil der vorab beschriebenen Wurfschaufel. Dieses Verkürzen des Rückenteiles 44 wird erforderlich, um den Abstand der Abstreukante 45 von der Rotationsachse 15 der Schleuderscheibe 10 bei der Grenzstreuwurfschaufel 42 wesentlich zu verringern. Dieses ist erforderlich, um die Arbeitsbreite der mit diesen Grenzstreuwurfschaufeln 42 versehenen Schleuderscheibe wesentlich zu verringern und ein am Feldrand steil abfallendes Streubild zu erhalten. Die jeweilige Einstellung dieser Grenzstreuwurfschaufeln 42 hinsichtlich ihrer Länge und ihres Anstellwinkels .... erfolgt in bereits erwähnter Weise nach den entsprechenden Angaben einer Streutabelle. Das Rückenteil 44 des inneren Teiles 43 der Grenzstreuwurfschaufel 42 kann wie mit strichpunktierten Linien gemäß Fig. 10 dargestellt, auch unterschiedlich lang ausgebildet sein. Hierdurch ergibt sich bei nicht ausgezogenem äußeren Teil 46 eine Verlagerung der Abstreukante 45.

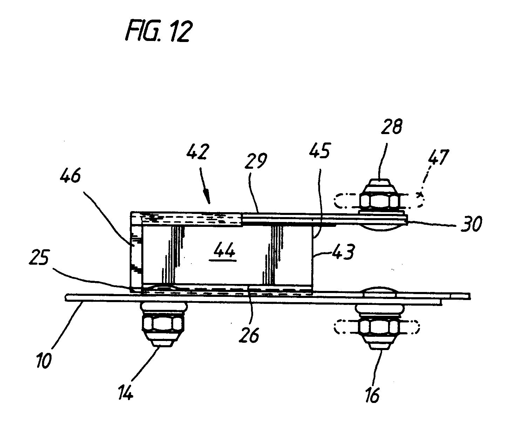

Zur Vereinfachung der jeweiligen Stellungen der Wurfschaufeln 11 und 42 kann es sinnvoll sein, die als Schraubverbindungen 18 und 27 ausgebildeten Festsetzmechanismen 16 und 28 mit den in Fig. 12 mit strichpunktierten Linien dargestellten Flügelmuttern 47 zu versehen. Aus Gründen der Stabilität kann es sinnvoll sein, den Festsetzmechanismus 28 durch mehrere einzelne, nebeneinander angeordnete Schraubverbindungen zu ersetzten. Mittels dieser auf den jeweiligen Schleuderscheiben 10 aufgesetzten längenveränderbaren und winkelverstellbaren Wurfschaufeln 11 und 42 ist es auf einfachste Weise möglich, unterschiedliche Arbeitsbreiten einzustellen, wobei die Wurfschaufeln 11 und 42 entsprechend den jeweiligen Streuguteigenschaften der jeweils auszustreuenden Düngersorte angepaßt werden kann.

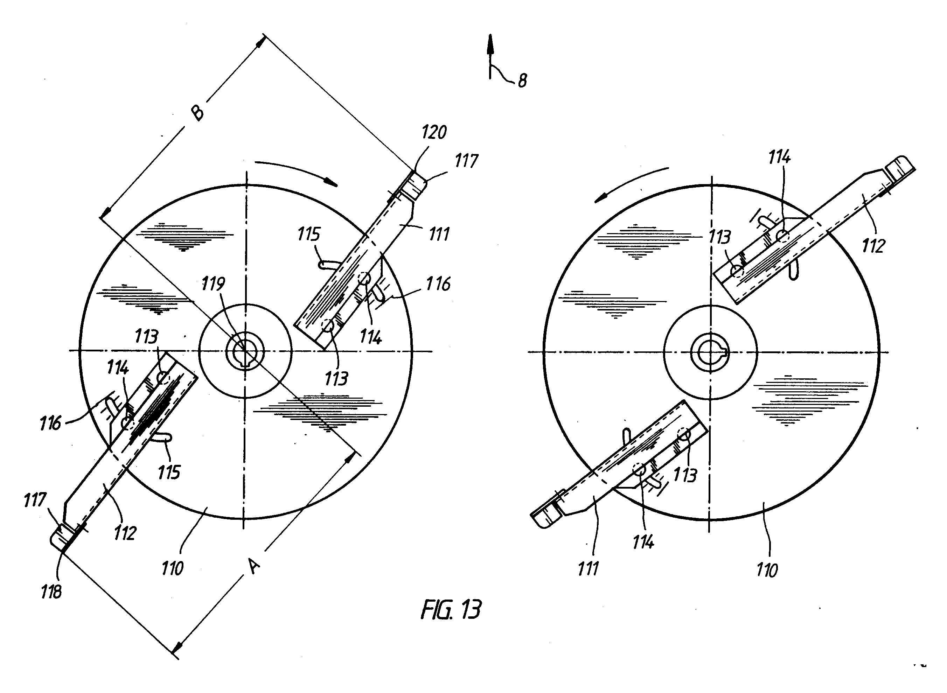

Die Schleuderscheiben 110 gemäß Fig. 13 sind für das Verteilen der Düngemittel über die größeren Arbeitsbreiten von 15 bis 24 m vorgesehen. Auf den Schleuderscheiben 110 sind jeweils spiegelbildlich zueinander die kürzere Wurfschaufel 111 und die längere Wurfschaufel 112 angeordnet. Die Wurfschaufeln 111 und 112 sind jeweils mit den Schraubbolzen 113 und 114 auf die Schleuderscheibe angeordnet. Der Schraubbolzen 113 ist jeweils in einer Bohrung, die sich in der Schleuderscheibe 110 befindet, angeordnet, während der Schraubbolzen 140 sich in einem kreisförmigen Langloch 115, welches in der Schleuderscheibe 110 befindet, angebracht ist. Hierdurch sind die Wurfschaufeln 111 und 112 um den Schraubbolzen 113 winkelverschwenkbar und in unterschiedlichen Winkelstellungen auf der Schleuderscheibe 110 anzuordnen. Zur Winkeleinstellung sind auf der Schleuderscheibe 110 als Kerben 116 ausgebildete Markierungen angeordnet. Die Wurfschaufeln 111 und 112 weisen an ihrem äußeren Ende in aufrechter Ebene verschwenkbare Streuflügel auf, wobei durch das Verstellen dieser Flügel 117 der Abwurfwinkel der Düngemittelpartikel in aufrechter Ebene veränderbar ist. Die Abstreukanten 118 der längeren Wurfschaufel 112 weisen zu der Drehachse 119 einen Abstand A von zumindest 35 bis zum 50 cm, vorzugsweise 40 cm auf. Die Abstreukante 120 der kürzeren Wurfschaufeln 111 für das Streuen über "größere" Streubreiten weist. Einen Abstand B von zumindest 25 bis 35 cm vorzugsweise etwa 30 cm zur Drehachse 119 auf.

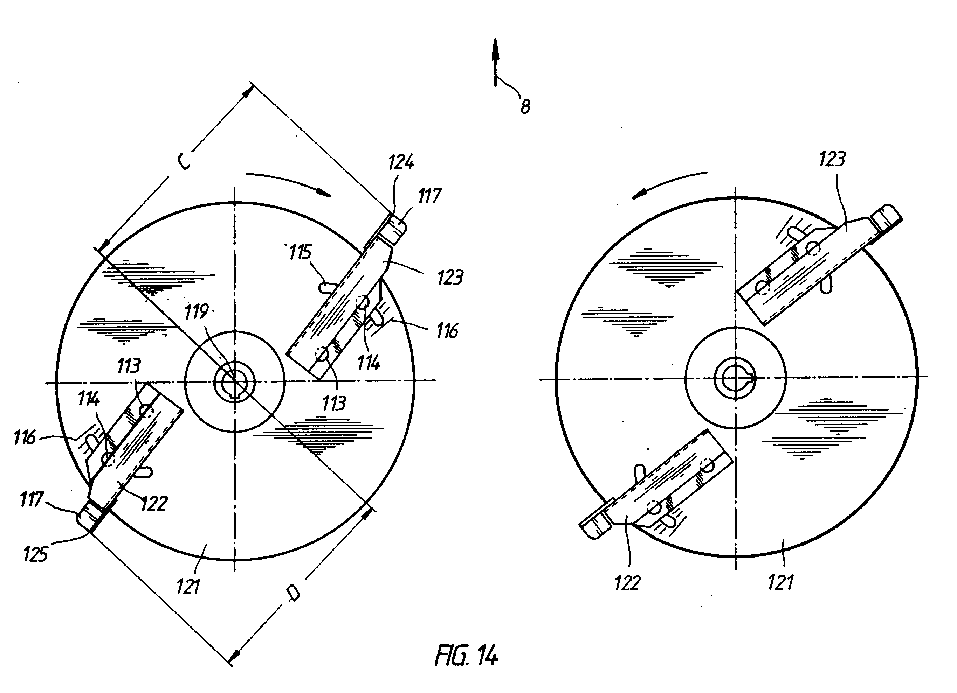

Für das Streuen der Düngemittelpartikel über kleinere Arbeitsbreiten von 6 bis 15 m werden die Schleuderscheiben 110 gemäß Fig. 13 gegen die Schleuderscheiben 121 gemäß Fig. 14 ausgetauscht. Auf diesen Schleuderscheiben 121 sind die kürzere Wurfschaufel 122 und die längere Wurfschaufel 123 angeordnet. Die Wurfschaufeln 122 und 123 sind mittels der Schraubbolzen 113 und 114 auf der Schleuderscheibe 121 befestigt. Der Schraubbolzen 114 ist in dem Langloch 115, welches in der Schleuderscheibe 121 angeordnet ist, um den Schraubbolzen 113 winkelverschwenkbar und in unterschiedlichen Stellungen mittels des Schraubbolzens 114 einzustellen und festzuklemmen Über die Markierungen, die als Kerben 116 ausgebildet sind, können die Wurfschaufeln 122 und 123 genau entsprechend der Angaben des Herstellers eingestellt werden.

Die Abstreukante 124 der längeren Wurfschaufel 123 weist zu der Drehachse 119 der Schleuderscheibe 21 einen Abstand C von 25 bis 35 cm, vorzugsweise von 28 cm auf.

Die Abstreukante 125 der kürzeren Wurfschaufel 123 für kleinere Streubreiten weist einen Abstand D von 118 bis 28 cm, vorzugsweise von 23 cm zur Drehachse 119 auf.

Es sei an dieser Stelle darauf hingewiesen, daß mit in Erfindung eingeschlossen ist, daß anstelle des Austausches der Schleuderscheiben 110 mit den Wurfschaufeln 111 und 112 gegen die Schleuderscheiben 121 mit den Wurfschaufeln 122 und 123 auch eingeschlossen sein soll, lediglich die Wurfschaufeln 111 und 112 für "größere" Streubreiten gegen die Wurfschaufeln 122 und 123 für "geringere" Streubreiten auszutauschen. Hierzu ist es dann lediglich erforderlich, die Schraubbolzen 113 und 114 zu lösen, so daß die Wurfschaufeln von den Schleuderscheiben freikommen.

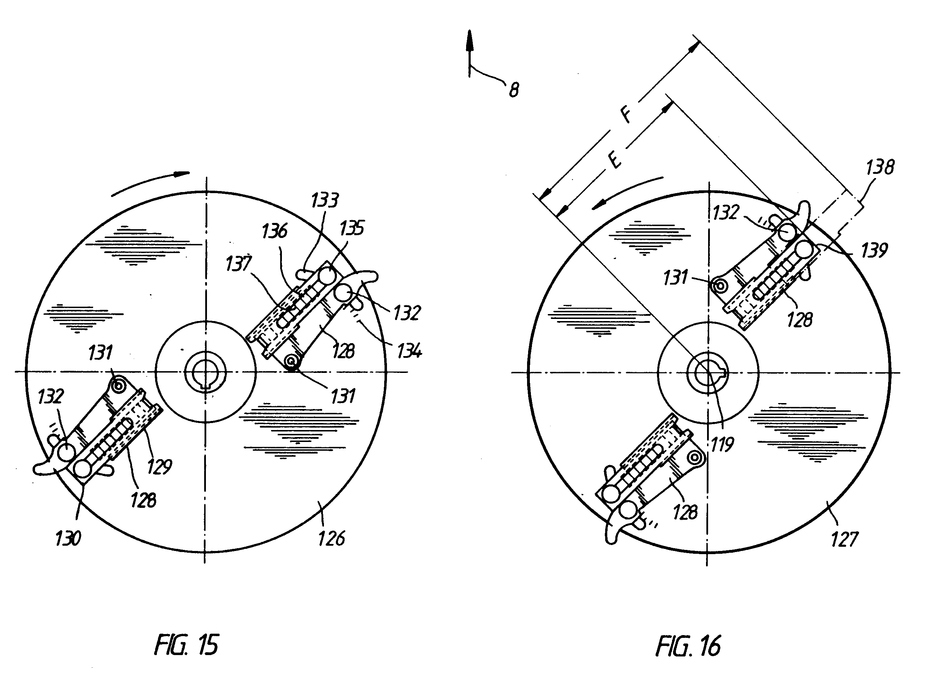

Zur Durchführung des "Grenzstreuens", je nach dem auf welcher Seite des Schleuderdüngerstreuers die Feldrandgrenze liegt, ist eine der in den Fig. 15 und 16 dargestellte Grenzstreuscheibe einzusetzen. Wenn die Feldrandgrenze auf der linken Seite des Schleuderdüngerstreuers liegt, ist die linke Schleuderscheibe gemäß Fig. 13 oder 14 gegen die Schleuderscheibe 126 für das "Grenzstreuen" gemäß Fig. 15 auszutauschen. Liegt die Feldrandgrenze auf der rechten Seite des Schleuderdüngerstreuers, so ist die rechte Schleuderscheibe gemäß Fig. 13 bzw. 14 gegen die Schleuderscheibe 127 für das "Grenzstreuen" gemäß Fig. 16 auszutauschen. Auf den Grenzstreuscheiben 126 bzw. 127 sind die teleskopartig längenveränderbaren Wurfschaufeln 128 angeordnet. Die Wurfschaufeln 128 bestehen aus dem inneren Teil 129 und dem äußeren Teil 130. Das innere Teil 129 ist mittels der Schraubbolzen 131 und 132 auf der Grenzstreuscheibe 126 angeordnet. Der Schraubbolzen 132 ist in dem kreisförmigen Langloch 133, welches sich in der Schleuderscheibe 126 befindet, angeordnet. Hierdurch ist die Schaufel 128 um den Schraubbolzen 131 angeordnet und in verschiedenen Positionen mittels des Schraubbolzens 132 festzuklemmen. Das Einstellen der Wurfschaufel 128 wird durch die als Kerbe 134 ausgebildete Markierung erleichtert. Die jeweilige einstellung wird vom Hersteller angegeben. Der äußere Teil 130 der Grenzstreuschaufel 128 ist mittels des Schraubbolzens 135 an dem inneren Teil 129 der Grenzstreuschaufel 128 befestigt. Damit das äußere Teil 130 der Grenzstreuschaufel 128 gegenüber dem inneren Teil 129 der Grenzstreuschaufel teleskopartig längenveränderbar und in unterschiedlichen Positionen festsetzbar ist, weist weist das äußere Teil 130 das Langloch 136 auf, in dem der Schraubbolzen 135, der an dem inneren Teil 129 der Grenzstreuschaufel 128 befestigt ist, geführt ist. Ebenfalls sind an der Grenzstreuschaufel 128 zwischen dem inneren Teil 129 und dem äußeren Teil 130 als Kerben ausgebildete Markierungen 137 vorgesehen, um so die Länge der Wurfschaufeln 128 in einfacher Weise entsprechend der Herstellerangaben einstellen zu können. Die Grenzstreuschaufel 128 wird für "geringere" Grenzstreuabstände in die mit durchzogenen Linien dargestellte Stellung gebracht, während sie für "größere" Arbeitsbreiten in die mit strichpunktierte Linien angedeutete Stellung 138 zu bringen und zu befestigen ist. Die Wurfschaufeln 128 sind in unterschiedlichen Längen einzustellen, so daß die Abstreukante 139 der Wurfschaufel 128 für geringere Grenzstreuabstände einen Abstand von zumindestens 10 cm, vorzugsweise 13 cm und für das Bestreuen von größeren Grenzstreuabständen einen Abstand F von bis zu 32 cm, vorzugsweise 28 cm aufweist.

Der Unterschied zwischen den Abständen A und B sowie C und D der Abstreukanten der Streuschaufeln der beiden Streuscheiben 110 und 121 für die "größere" und die "kleinere" Streubreite zur Drehachse muß zumindestens 3 bis 10 cm betragen.

Des weiteren müssen die Wurfschaufeln 122, 123 für die "kleineren" Streubreiten sowie die Wurfschaufeln 111, 112 für die "größeren" Streubreiten so ausgebildet sein, daß die Abstreukante der Wurfschaufeln für die größeren Streubreiten um zumindest 5 cm und/oder 1/4 des Abstreukantenabstandes weiter von der Drehachse 119 entfernt sind als die Abstreukanten der Wurfschaufeln 122, 123 für die "kleineren" Streubreiten, während die Streukanten der Wurfschaufeln für die kleineren Streubreiten um zumindest 5 cm und/oder 1/4 des Abstreukantenabstandes weiter von der Drehachse 119 als die Abstreukanten der Wurfschaufeln 128 für das "Grenzstreuen" entfernt sein müssen.

Um die erfindungsgemäßen Wirkungen zu erzielen, weisen die Wurfschaufeln 111,112 für das Streuen über die "größeren" Streubreiten von 15 bis 24 m an ihren Abstreukanten 118, 120 eine Umfangsgeschwindigkeit von etwa 18 bis 37 m/sec, vorzugsweise ca. 23 m/sec für die kürzere Wurfschaufel 111 und ca. 30 m/sec für die längere Wurfschaufel 112 auf. Die Umfangsgeschwindigkeiten an den Abstreukanten 124,125 der Wurfschaufeln 122,123 für "kleinere" Streubreiten von 6 bis 15 betragen etwa 13 bis 26 m/sec, vorzugsweise ca. 17 m/sec für die kürzere Wurfschaufel 122 und ca. 21 m/sec für die längere Wurfschaufel 123. Die Umfangsgeschwindigkeit an den Abstreukanten 139 der Wurfschaufeln 128 für das Grenzstreuen betragen zwischen etwa 8 m/sec, vorzugsweise ca. 10 m/sec für kleinere Grenzstreuabstände von 5 und 6 m und 26 m/sec, vorzugsweise 21 m/sec für größere Grenzstreuabstände von 110 bis 112 m.

Die Fig. 2 zeigt die rechte Schleuderscheibe 10 des Schleuderdüngerstreuers 1, die als "Normaldstreuscheibe" 201 ausgebildet ist. Die Schleuderscheiben 10 des Schleuderdüngerstreuers 1 werden gegenläufig angetrieben, wobei die rechte Schleuderscheibe 10 gemäß Fig. 2 in Pfeilrichtung 202 angetrieben wird. Die Schleuderscheibe 201 weist die beiden Wurfschaufeln 203 auf, die für das sog. "Normalstreuen" vorgesehen sind. Die jeweiligen Wurfschaufeln 203 sind winkelverschwenkbar um den Drehpunkt 204 auf der Schleuderscheibe 201 befestigt. Diese winkelverschwenkbaren Wurfschaufeln 203 weisen den Festsetzmechanismus 205 auf, der beispielsweise als lösbare Schraube ausgebildet ist und mit dem sich in der Schleuderscheibe 201 befindlichen Langloch 206 zusammenwirkt. Parallel zu dem Langloch 206 ist die Aussparung 207 in die Schleuderscheibe 201 eingestanzt. In diese Aussparung 207 ist die Einstellskala 208 mit ihren Markierungspunkten 209 von unten in die Schleuderscheibe 201 eingesetzt. Diese Skala 208 ist beispielsweise aus Kunststoff hergestellt und weist an ihren gegenüberliegenden Seiten 210 durch die Aussparungen 211 fassende Halterungen 212, die beispielsweise als Schnappverschlüsse ausgebildet sind, auf. Zur besseren Abstützung gegenüber der Schleuderscheibe 201 weisen die in die Aussparungen 207 eingesetzten Skalen 208 jeweils an ihren Längsseiten 213 unter die Schleuderscheibe 201 fassende Streifen 214 auf. Damit die Einstellskala 208 auch unterhalb der Schleuderscheibe 201 abgestützt wird, sind unterhalb der jeweiligen Skala 208 und der Schleuderscheibe 201 mit den Wurfschaufeln 203 jeweils verschwenkbare Halteelemente 215 angeorndet. Dieses mit der jeweiligen Wurfschaufel 203 verschwenkbare Halteelement 215 ist an dem Drehpunkt 204 der Wurfschaufel 203 und dem Festsetzmechanismus 205 befestigt. Die jeweiligen Halteelemente 215 verhindern, daß die Einstellskalen 208 aus den Aussparungen 207 der Schleuderscheibe 201 herausfällen.

Das Anzeigenfeld 216 der Einstellskala 208 weist die gleiche Kontur auf, wie die Aussparung 207 der Schleuderscheibe 201. Damit die Düngemittelpartikel gleichmäßig über den Arbeitsbereich des Schleuderdüngerstreuers 1 verteilt werden, sind die Wurfschaufeln 203 dieser Schleuderscheiben 201 unterschiedlich lang ausgebildet. Die Anordnung unterschiedlich langer Wurfschaufeln 203 auf der Schleuderscheibe 201 gewährleistet, daß die Düngemittelpartikel gleichmäßig über die gesamte Arbeitsbreite verteilt werden. Bei der Schleuderscheibe 201 gemäß Fig. 2 lassen sich nun die Anstellwinkel der Wurfschaufeln 203 unterschiedlich einstellen, indem die Wurfschaufeln 203 um den Drehpunkt 204 im Bereich des Langloches 206 verschwenkt werden. Um nun bei einer ganz bestimmten Düngersorte, unter Berücksichtigung der speziellen Streuguteigenschaften des auszustreuenden Düngers, eine ganz bestimmte Arbeitsbreite zu erzielen, ist es erforderlich, daß die Wurfschaufeln 203 zur Erzeugung eines optimalen Streubildes unterschiedlich angestellt werden. Aus diesem Grunde sind die Skalen 208 der einzelnen Wurfschaufeln 203 mit unterschiedlichen Markierungspunkten ausgebildet, so daß die einzelnen Markierungspunkte der Einstellskalen 208 jeweils nur einmal vorhanden sind. Hierdurch wird gewährleistet, daß die Wurfschaufeln 203 unverwechselbar einstellbar sind, d.h. es ist nicht möglich, die aus der Streutabelle entnommenen Einstelldaten, die einer bestimmten Wurfschaufel 203 zugeordnet werden müssen, für die Wurfschaufeln 203 zu vertauschen.

Soll nun beispielsweise eine ganz bestimmte Düngersorte über einen Streubereich von 16 m verteilt werden, schlägt der Benutzer des Schleuerdüngerstreuers 1 die zu dem Streuer zugehörige Streutabelle auf und ermittelt die Einstelldaten für die winkelverschwenkbaren Wurfschaufeln 203 der als Normalstreuscheibe 201 ausgebildeten Schleuderscheibe für die auszustreuenden Düngermittelsorten bei der gewünschten Streubreite. Werden hierfür nun der Streutabelle beispielsweise die Daten

"5" und "16"

entnommen, werden die Wurfschaufeln 203 der Schleuderscheibe 201 nach Lösen der jeweiligen Festsetzmechanismen 205 derart verschwenkt, bis daß diese entsprechenden Zahlen bzw. Markierungspunkte 209 des Anzeigenfeldes 216 an der als Zeiger 217 ausgebildeten Kante 218 der jeweigen Wurfschaufel 203 ablesbar sind. Dadurch, daß die Anzeigenfelder 216 der den beiden Wurfschaufeln 203 zugeordneten Skalen 208 unterschiedlich ausgebildet sind, ist eine unverwechselbare Einstellung der winkelverschwenkbaren Wurfschaufeln 203, der als Normalstreuscheibe 201 ausgebildeten Schleuderscheibe, gewährleistet. Streufehler durch unsachgemäße Einstellung der Wurfschaufeln 203 sind somit völlig ausgeschlossen.

Damit die Streuscheiben 201 auch für die sog. Spätdüngung eingesetzt werden können, weisen die Wurfschaufeln 203 jeweils an ihren äußeren Enden als sog. Schwenkschaufeln ausgebildete Teile 219 auf, welche um die Schwenkachse 220 in aufrechter Ebene schwenkbar sind. Dieses Teil 219 läßt sich in zwei verschiedene Positionen arretieren, so daß sich die Flugkurve der von den Wurfschaufeln 203 abgeschleuderten Düngemittelpartikel verändern läßt, so daß sich Pflanzen in unterschiedlichen Wachstumsstadien düngen lassen.

Damit nun bei der Montage der einzelnen Skalen 208 an den Schleuderscheiben 201 keine Verwechselung vorgenommen werden kann, sind die Einstellskalen 208 unterschiedlich lang ausgebildet, d.h., die sich gegenüberliegenden Stirnseiten 210 weisen einen unterschiedlich großen Abstand voneinander auf, so daß sie nur in eine bestimmte Aussparung 207 bzw. 211 passen und so nicht vertauscht werden können. Hierdurch werden auf jeder Scheibe 201 zwei unterschiedliche Skalen 208 montiert, so daß jeder Wurfschaufel 203 eine eigene spezielle Skala 208 zugewiesen wird. Hierdurch sind die einzelnen Stellungen der Wurfschaufeln 203 genau definiert und somit unverwechselbar.

Bei der Schleuderscheibe 221 gemäß Fig. 5 handelt es sich um die rechte Schleuderscheibe des Schleuderdüngerstreuers 1, die für das sog. "Breitstreuen" ausgebildet ist. Diese Schleuderscheibe 221 unterscheidet sich nur durch die längeren Wurfschaufeln 222, die die Düngemittel über einen weiteren Streubereich abschleudern, von der Normalstreuscheibe 201 gemäß Fig. 2. Die Anzeigenfelder 216 der Einstellskalen 208 dieser Breitstreuscheibe 221 weisen ebenfalls für die beiden ungleich langen Wurfschaufeln 222 ungleiche Markierungspunkte 223 bzw. Ziffern auf, damit auch hier ein unverwechselbares Einstellen der winkelverschwenkbaren Wurfschaufeln 222 der als Breitstreuscheibe 221 ausgebildeten Schleuderscheibe gewährleistet ist.

Bei der Schleuderscheibe 224 gemäß Fig. 8 handelt es sich um eine rechte Schleuderscheibe des Schleuderdüngerstreuers 1, die als Grenzstreuscheibe ausgebildet ist. Die Grenzstreuscheibe 224 weist die gleich langen Wurfschaufeln 225 auf, die ebenfalls winkelverschwenkbar um den Drehpunkt 204 an der Schleuderscheibe 224 befestigt sind. Die Wurfschaufeln 225 weisen den Festsetzmechanismus 226 auf, der beispielsweise als lösbare Schraube ausgebildet ist, und mit dem in der Schleuderscheibe 224 sich befindlichen Langloch 227 zusammenwirkt. Parallel zum Langloch 227 befindet sich die ebenfalls als Langloch ausgebildete Aussparung 228 in der Schleuderscheibe 224. In diese Aussparung 228 ragt von unten das als Kunststoffteil ausgebildete Einstellskalenelement 229 hinein. Für die als Grenzstreuscheibe eingesetzte Schleuderscheibe 224 sind Einstellskalen 229 mit gleichen Markierungen bzw. Zeichen 230 für beide Wurfschaufeln 225 vorgesehen, da die Einstellung beider Wurfschaufeln 225 gleich ist. Dieses ist erforderlich, um ein am Feldrand steil abfallendes Streubild zu erzeugen.

Bei der Schleuderscheibe 231 gemäß Fig. 11 handelt es sich um eine Schleuderscheibe die sich gleichzeitig für das sog. "Normal- und Breitstreuen" einsetzen läßt. Diese Schleuderscheibe 231 weist die Wurfschaufeln 232 auf. Die jeweiligen Wurfschaufeln 232 bestehen aus den zwei teleskopartig in Längsrichtung der Wurfschaufeln 232 zueinander verschiebbaren und in verschiedenen Längen der Wurfschaufeln 232 festsetzbaren Teile 233 und 234. Diese Wurfschaufeln 232 sind derart ausgebildet, daß der innere Teil 233 der Wurfschaufel 232 in radialer Richtung unverschiebbar ist. Diese längenveränderbaren Wurfschaufeln 232 sind jeweils winkelverschwenkbar auf der Schleuderscheibe 231 angeordnet. Hierbei befindet sich die Schwenkachse 204 einer jeden Wurfschaufel 232 in der der Rotationsachse 235 der jeweiligen Schleuderscheibe 231 zugewandten Hälfte des inneren Teiles 233 der Wurfschaufel 232. Der Festsetzmechanismus 236 der winkelverschwenkbaren Schaufeln 232 befindet sich in der dem äußeren Rand der Schleuderscheibe 231 zugewandten Hälfte des inneren Teiles 233 der Wurfschaufel 232. Dieser Festsetzmechanismus 236 ist beispielsweise als lösbare Schraube ausgebildet und wirkt mit dem sich in der Schleuderscheibe 231 befindlichen Langloch 237 zusammen. Parallel zu dem Langloch 237 befindet sich die Aussparung 238 in der Schleuderscheibe 231, in der sich die Einstellskala 239 mit den Markierungen 240 befindet, die die verschiedenen Positionen darstellen, in denen die winkelverschwenkbaren Wurfschaufeln 232 einstellbar sind. Hierzu wirkt die Kante 241 des inneren Teiles 233 der Wurfschaufel 232 als Zeiger 242 mit den Markierungen 240 der Einstellskala 239 zusammen.

Die jeweilige Lage des inneren Teiles 233 und des äußeren Teiles 234 der Wurfschaufel 232 zueinander wird mittels des als Schraubverbindung ausgebildeten Festsetzmechanismuses 243 bestimmt. Dieser Festsetzmechanismus 243 zum Festsetzen der zueinander in Längsrichtung der Wurfschaufeln 232 verschiebbaren Teile 233 und 234 ist zwischen den oberen Schenkeln der zueinander verschiebbaren Teile 233 und 234 angeordnet. Das äußere Teil 234 weist das Langloch 244 auf und ist somit stufenlos gegenüber dem inneren Teil 233 verstellbar. Die Kante 245 des ausziehbaren äußeren Teiles 234 wirkt mit der in der Vertiefung 246 des oberen Schenkels des inneren Teiles 233 angeordneten Skala 247 zusammen.

Damit nun die Düngemittel gleichmäßig über die zu bestreuende Fläche verteilt werden können, ist es notwendig, die Wurfschaufeln 232 der Schleuderscheibe 231 entsprechend der gewünschten Arbeitsbreite und des ausstreuenden Düngematerials, unter Berücksichtigung des jeweiligen Streuguteigenschaften, individuell anhand einer Streutabelle einzustellen. Hierzu ist es erforderlich, daß die beiden Wurfschaufeln 232 der Schleuderscheibe 231 in ihrem Winkel unterschiedlich angestellt werden und die Länge einer jeden Wurfschaufel 232 individuell anhand der Angaben der Streutabelle eingestellt werden. Damit es auch hier nicht zu Verwechselungen bei der Einstellung der Länge der teleskopartigen Wurfschaufeln 232 kommt, weisen die Skalen 247 der inneren Teile 233 unterschiedliche Bezeichnungen 248 auf. Um nun eine unverwechselbare Winkeleinstellung ebenfals der Wurfschaufeln 232 der Schleuderscheibe 240 vorzunehmen, weisen die Skalen 239 für die Winkelverstellung unterschiedliche Bezeichnungen 231 auf, so daß die Winkeleinstellung unverwechselbar wird.

Soll jetzt beispielsweise eine ganz bestimmte Düngersorte über einen Arbeitsbereich von 20 m ausgebracht werden, so sind in der Streutabelle unter der Berücksichtigung der jeweiligen Düngersorte und der gewünschten Arbeitsbreite beispielsweise die Angaben:

"D" und "9"
"O" und "20"

angegeben. Da diese Bezeichnungen nur einmal auftauchen, lassen sich die Wurfschaufeln 232 exakt und unverwechselbar einstellen. Dem Landwirt ist nun bekannt, daß er die entsprechende Wurfschaufel 232, die mit der jeweiligen Einstellskala 239, auf der sich der Buchstabe "D" befindet, derart verschwenken muß, daß die Kante 241 mit der mit "D" gekennzeichneten Markierung 240 deckungsgleich ist. In dieser Position wird der Festsetzmechanismus 236 befestigt. Zur Erleichterung der Einstellung der verschiedenen Positionen läßt sich die Schraubverbindung 236 beispielsweise mit einer Flügelmutter versehen. Als nächstes löst der Landwirt den Festsetzmechanismus 243, der beispielsweise auch aus zwei nebeneinander angeordneten Schraubverbindungen bestehen kann und verschiebt das äußere Teil 234 gegenüber dem inneren Teil 233 der Wurfschaufel 232 so lange, bis die Kante 245 des äußeren Teiles 234 deckungsgleich mit der auf der Skala 247 angebrachten Ziffer "9" ist. In dieser Stellung wird das äußere Teile 234 der Wurfschufel 232 mittels des als Schraubverbindung ausgebildeten Festsetzmechanismuses 243 arretiert.

Nun wird die andere Wurfschaufel 232 entsprechend den Angaben ("0" und "20") der Streutabelle eingestellt. Diese Einstellung erfolgt in der bereits beschriebenen Weise. Mittels dieser winkelverschwenkbar auf den jeweiligen Schleuderscheiben 231 angeordneten, teleskopartig ausgebildeten Wurfschaufeln 232 läßt sich der Abstand der Abstreukante 249 und der jeweilige horizontale Anstellwinkel zwischen der Wurfschaufel 232 und der an der Stelle ihrer Abstreukante 249 an ihrer Umlaufbahn in Drehrichtung angelegten Tangente exakt einstellen. Hierdurch ist es möglich, alle handelsüblichen Düngersorten gleichmäßig unter Berücksichtigung ihrer jeweiligen Streueigenschaften über die genau einstellbaren Arbeitsbreiten zu verteilen.

Die Schleuderscheibe 250 gemäß Fig. 16 ist mit zwei teleskopartigen in Längsrichtung der Wurfschaufeln 251 zueinander verschiebbaren und bei verschiedenen Längen der Wurfschaufeln 251 festsetzbaren Teilen 252 und 253 ausgerüstet. Die Wurfschaufeln 251 sind ebenfalls winkelverschwenkbar auf der Schleuderscheibe 250, die als Grenzstreuscheibe ausgebildet ist, angeordnet. Bei diesen teleskopartig ausgebildeten Wurfschaufeln 251 für das Grenzstreuen handelt es sich im wesentlichen um kürze Wurfschaufeln 251, als bei den Wurfschaufeln der Schleuderscheibe 231 gemäß Fig. 11. Diese Grenzstreuwurfschaufeln 251 unterscheiden sich nur in der Ausbildung des verschiebbaren äußeren Teiles 253, daß bei diesen sog. Grenzstreuwurfschaufeln 251 wesentlich kürzer ist, als das äußere Teil 234 der in der vorhergehenden Fig. 11 beschriebenen Wurfschaufeln 232. Das innere Teil 252 der Grenzstreuwurfschaufeln 251 unterscheidet sich nur hinsichtlich eines verkürzten Rückenteiles 254 von dem inneren Teil 233 der Wurfschaufel 232 der Schleuderscheibe 231 gemäß Fig. 11. Dieses Verkürzen des Rückenteiles 254 wird erforderlich, um den Abstand der Abstreukante 255 von der Rotationsachse 235 der Schleuderscheibe 250 bei den Grenzstreuwurfschaufeln 251 wesentlich zu verringern. Dieses ist erforderlich, um die Arbeitsbreite der mit diesen Grenzstreuwurfschaufeln 251 versehenen Schleuderscheiben 250 wesentlich zu verringern um ein am Feldrand steil abfallendes Streubild zu erhalten. Die jeweilige Einstellung dieser winkelverschwenkbaren Grenzstreuwurfschaufeln 251 hinsichtlich ihrer Länge und ihres Anstellwinkels erfolgt in bereits erwähnter Weise nach den entsprechenden Angaben einer Streutabelle. Bei dieser als Grenzstreuscheibe ausgebildeten Schleuderscheibe 250 sind die Einstellskalen für die Einstellung der Winkelverschwenkbarkeit und der Länge jeweils gleich ausgebildet. Die Einstellskala 256 einer jeden Wurfschaufel 251 weist die gleichen Markierungselemente 257 für die Einstellung der Winkelverschwenkbarkeit auf. Die jeweiligen Einstellskalen 258 für die Längenveränderung der Wurfschaufeln 251 weisen ebenfalls die gleichen Markierungselemente 259 für die beiden, auf der Schleuderscheibe 250 jeweils angeordneten Wurfschaufeln 251 auf. Die Kante 260 des inneren Teiles 252 der Wurfschaufel 250 wirkt mit der Einstellskala 256 für die Winkelverschwenkbarkeit zusammen, während die Kante 261 des äußeren Teiles 253 der Wurfschaufel 250 mit der Einstellskala 258 für die Längenveränderung zusammenwirkt.

**Patentansprüche**

1. Schleuderdüngerstreuer zum Verteilen von Düngemitteln und dgl. mit einem Vorratsbehälter, der Dosierelemente für zumindest zwei, vorzugsweise quer zur Fahrtrichtung angeornedten, Schleuderscheiben aufweist und jede Schleuderscheibe mit zumindest zwei Wurfschaufeln ausgestattet ist, wobei die Wurfschaueln in Scheibenebene verschwenkbar und in verschiedene Positionen festsetzbar auf der Schleuderscheibe angeordnet sind, wobei auf den Schleuderscheiben (10, 121, 126, 127, 201, 221, 224, 231, 250) eine Anzahl von Arretierungs- und/oder Einstellmarkierungen (20, 34, 203, 222, 225, 232, 251) für die Wurfschaufeln (11, 42, 111, 112, 122, 123, 128, 209, 223, 230, 240, 257) vorgesehen sind, **dadurch gekennzeichnet,** daß die Abstände der Abstreukanten der Wurfschaufeln zur Drehachse der Schleuderscheibe wesentlich unterschiedlich sind und daß die Einstellmarkierungen in die Schleuderscheibe (10, 121, 126, 127, 201, 221, 224, 231, 250) eingelassen sind.

2. Schleuderstreuer nach Anspruch 1, dadurch gekennzeichnet, daß die Markierungen aus Kunststoff ausgebildet und in Vertiefungen in die Scheibe einschnappbar, vorzugsweise mittels Klipp- und/oder Schnappverschlüsse, ausgebildet sind.

3. Schleuderdüngerstreuer nach einem oder mehreren der vorstehenden Ansprüche, dadurch gekennzeichnet, daß die Skalen (208,229,239,247,258,256), die den Wurfschaufeln (203,222,225,232,251) zu deren Einstellung zugeordnet sind, verschiedenartig (wie Form oder Größe, einen Pfeil aufweisende Markierung) ausgebildet sind.

4. Schleuderdüngerstreuer nach einem oder mehreren der vorstehenden Ansprüche, dadurch gekennzeichnet, daß die Skalen (208,229,239,247,258,256) in Aussparungen (207,211), welche sich in den Schleuderscheiben (201,221,224,231,250) befinden, angeordnet sind, daß die Skalen aus Kunststoff hergestellt sind.

5. Schleuderdüngerstreuer nach Anspruch 4, dadurch gekennzeichnet, daß die Skala (208,229,239,247,258,256) an den einander gegenüberliegenden Stirnseiten (210) jeweils durch die Aussparungen (211) fassende Halterungen (212) aufweist, während die Längsseiten (213) unter die Schleuderscheibe (201,221,224,231,250) fassende Streifen aufweisen.

6. Schleuderstreuer nach Anspruch 1 oder 2, dadurch gekennzeichnet, daß die jeweilige Skala (34) in einer Vertiefung (33) angeordnet ist.

7. Schleuderstreuer nach Anspruch 1,2 oder 6, dadurch gekennzeichnet, daß in die Schleuderscheibe (10) eine Vertiefung zur Anordnung der Skala (20) eingeprägt ist.

8. Schleuderdüngerstreuer nach Anspruch 1, dadurch gekennzeichnet, daß für jede Wurfschaufel (11,42,111,112,122,123,128,209,223,230,240,2-57) eigene Arretierungs- und/oder Einstellmarkierungen (20,34,203,222,225,232,251) vorgesehen sind.

9. Schleuderdüngerstreuer nach Anspruch 1 und/oder 2, dadurch gekennzeichnet, daß die Markierungen (20,34,203,222,225,232,251) mit Symbolen (Zahlen, Buchstaben) gekennzeichnet sind.

10. Schleuderstreuer nach einem oder mehrerer der vorstehenden Ansprüche, dadurch gekennzeichnet, daß die Symbole für die Markierungen (20,34,203,222,225,232,251) der Wurfschaufeln (11,42,111,112,122,123,128,209,223,230,240,2-57) jeder Schleuderscheibe (10,121,126,127,201,221,224,231,250) zumindest für die längste und die kürzeste unterschiedlich und unverwechselbar sind.

11. Schleuderdüngerstreuer nach einem oder mehreren der vorgesehenen Ansprüche, dadurch gekennzeichnet, daß zumindest zwei Wurfschaufeln (203,222,225,232,251) auf jeder Schleuderscheibe (201,221,224,231,250) angeordnet sind, daß sich für jede Wurfschaufel (203,222,225,232,251) zur Einstellung des horizontalen Abwurfwinkels Markierungselemente (209,223,230,240,257) auf der Schleuderscheibe (201,221,224,231,250) befinden, welche unterschiedlich ausgebildet und/oder unterschiedlich bezeichnet sind und zwar derart, daß die Markierungspunkte (209,223,230,240,257) eindeutig und unverwechselbar jeweils einer Wurfschaufel (203,222,225,232,251) zugeordnet sind.

12. Schleuderdüngerstreuer nach Anspruch 14, dadurch gekennzeichnet, daß für die jeder Wurfschaufel (203,222,225,232,251) zugeordneten Markierungselemente (209,223,230,240,257) zum Einstellen der Wurfschaufel (203,222,225,232,251) andere Bezeichungen oder Symbole gewählt werden.

13. Schleuderdüngerstreuer nach Anspruch 5, dadurch gekennzeichnet, daß unterhalb der Skala (208,229,239,247,258,256) und der Schleuderscheibe (201,221,224,231,250) mit der Wurfschaufel (203,222,225,232,251) verschwenkbare Halteelemente (215) angeordnet sind.

**Claims**

1. Centrifugal fertilizer broadcaster for distributing fertilizers and the like, including a hopper, which includes metering means for at least two centrifugal discs, which are preferably disposed transversely relative to the direction of travel, and each centrifugal disc is provided with at least two throwing vanes, the throwing vanes being disposed on the centrifugal disc so as to be pivotable in the plane of the disc and so as to be securable into various positions, a number of locking and/or adjustment markers (20, 34, 203, 222, 225, 232, 251) for the throwing vanes (11, 42, 111, 112, 122, 123, 128, 209, 223, 230, 240, 257) being provided on the centrifugal discs (10, 121, 126, 127, 201, 221, 224, 231, 250), characterised in that the spacings between the dispersing edges of the throwing vanes and the axis of rotation of the centrifugal disc are substantially different, and in that the adjustment markers are introduced into the centrifugal disc (10, 121, 126, 127, 201, 221, 224, 231, 250).

2. Centrifugal broadcaster according to claim 1, characterised in that the markers are formed from plastics material and are provided in recesses so as to be snap-lockable into the disc, preferably by means of clip and/or snap closures.

3. Centrifugal fertilizer broadcaster according to one or more of the preceding claims, characterised in that the scales (208, 229, 239, 247, 258, 256), which are associated with the throwing vanes (203, 222, 225, 232, 251) for the adjustment thereof, have various configurations (in respect of form or size, a marker having an arrow, for example).

4. Centrifugal fertilizer broadcaster according to one or more of the preceding claims, characterised in that the scales (208, 229, 239, 247, 258, 256) are disposed in recesses (207, 211), which are situated in the centrifugal discs (201, 221, 224, 231, 250), and in that the scales are formed from plastics material.

5. Centrifugal fertilizer broadcaster according to claim 4, characterised in that each scale (208, 229, 239, 247, 258, 256) includes mounting supports (212), which extend through the recesses (211), on the end faces (210) which lie opposite one another, while the elongate ends (213) include strips which extend beneath the centrifugal disc (201, 221, 224, 231, 250).

6. Centrifugal broadcaster according to claim 1 or 2, characterised in that the respective scale (34) is disposed in an indentation (33).

7. Centrifugal broadcaster according to claim 1, 2 or 6, characterised in that an indentation for the accommodation of the scale (20) is stamped into the centrifugal disc (10).

8. Centrifugal fertilizer broadcaster according to claim 1, characterised in that each throwing vane (11, 42, 111, 112, 122, 123, 128, 209, 223, 230, 240, 257) is provided with its own locking and/or adjustment markers (20, 34, 203, 222, 225, 232, 251).

9. Centrifugal fertilizer broadcaster according to claim 1 and/or 2, characterised in that the markers (20, 34, 203, 222, 225, 232, 251) are featured with symbols (numbers, letters).

10. Centrifugal broadcaster according to one or more of the preceding claims, characterised in that the symbols for the markers (20, 34, 203, 222, 225, 232, 251) of the throwing vanes (11, 42, 111, 112, 122, 123, 128, 209, 223, 230, 240, 257) of each centrifugal disc (10, 121, 126, 127, 201, 221, 224, 231, 250) are different and non-interchangeable, at least for the longest and for the shortest.

11. Centrifugal fertilizer broadcaster according to one or more of the preceding claims, characterised in that at least two throwing vanes (203, 222, 225, 232, 251) are disposed on each centrifugal disc (201, 221, 224, 231, 250), and in that marker elements (209, 223, 230, 240, 257) are situated on the centrifugal disc (201, 221, 224, 231, 250) for each throwing vane (203, 222, 225, 232, 251) for the setting of the horizontal throwing angle, which marker elements have different configurations and/or have different features, such that the marking points (209, 223, 230, 240, 257) are clearly and non-interchangeably associated with each respective throwing vane (203, 222, 225, 232, 251).

12. Centrifugal fertilizer broadcaster according to claim 14, characterised in that other features or symbols are selected for the marker elements (209, 223, 230, 240, 257), which are associated with each throwing vane (203, 222, 225, 232, 251), for the setting of the throwing vanes (203, 222, 225, 232, 251).

13. Centrifugal fertilizer broadcaster according to claim 5, characterised in that retaining means (215), which are pivotable with the throwing vane (203, 222, 225, 232, 251), are disposed beneath the scale (208, 229, 239, 247, 258, 256) and the centrifugal disc (201, 221, 224, 231, 250).

**Revendications**

1. Epandeur centrifuge d'engrais pour distribuer des engrais ou produits analogues, comportant un réservoir d'alimentation équipé d'éléments de dosage pour au moins deux disques d'épandage disposés de préférence transversalement à la direction de déplacement, chaque disque étant équipé d'au moins deux palettes d'éjection, ces palettes d'éjection pouvant pivoter dans le plan du disque et se bloquer dans différentes positions sur le disque d'épandage, les disques d'épandage (10, 121, 126, 127, 201, 221, 224, 231, 250) comportant un certain nombre de repères de blocage et/ou de réglage (20, 34, 203, 222, 225, 232, 251) pour les palettes d'éjection (11, 42, 111, 112, 122, 123, 128, 209, 223, 230, 240, 257),
caractérisé en ce que l'écartement des arêtes d'éjection des palettes d'éjection par rapport à l'axe de rotation des disques d'épandage est en principe différent et en ce que les repères de réglage sont réalisés dans les disques d'épandage (10, 121, 126, 127, 201, 221, 224, 231, 250).

2. Epandeur centrifuge selon la revendication 1, caractérisé en ce que les repères sont en matière synthétique et sont enclipsés dans des cavités du disque de préférence à l'aide de moyens de liaison par enclipsage ou encliquetage.

3. Epandeur centrifuge d'engrais selon l'une quelconques des revendications précédentes, caractérisé en ce que les échelles (208, 229, 239, 247, 258, 256) associées aux palettes d'éjection (203, 222, 225, 232, 251) pour leur réglage sont de type différent (telle que la forme ou les dimensions, un repère comportant une flèche).

4. Epandeur centrifuge selon l'une des revendications précédentes, caractérisé en ce que les échelles (208, 229, 239, 247, 258, 256) sont prévues dans des cavités (207, 211) des disques d'épandage (201, 221, 224, 231, 250) et les échelles sont en matière synthétique.

5. Epandeur centrifuge d'engrais selon la revendication 4, caractérisé en ce que les échelles (208, 229, 239, 247, 258, 256) sont prévues sur les faces frontales opposées (210) avec des moyens de fixation (212) comportant des cavités (211) et les grands côtés (213) comportent des bandes venant sous le disque d'épandage (201, 221, 224, 231, 250).

6. Epandeur centrifuge selon la revendication 1 ou 2, caractérisé en ce que l'échelle respective (34) est prévue dans une cavité (33).

7. Epandeur centrifuge selon la revendication 1, 2 ou 6, caractérisé en ce qu'une cavité est matricée dans le disque d'épandage (10) pour recevoir une échelle (20).

8. Epandeur centrifuge d'engrais selon la revendication 1, caractérisé en ce que pour chaque palette d'éjection (11, 42, 111, 112, 122, 123, 128, 209, 223, 230, 240, 257), il y a des repères de réglage et/ou de blocage distincts (20, 34, 203, 222, 225, 232, 251).

9. Epandeur centrifuge d'engrais selon la revendication 1 ou 2, caractérisé en ce que les repères (20, 34, 203, 222, 225, 232, 251) sont caractérisés par des symboles (chiffres et lettres).

10. Epandeur centrifuge selon l'une quelconque des revendications précédentes, caractérisé en ce que les symboles des repères (20, 34, 203, 222, 225, 232, 251) des palettes d'éjection (11, 42, 111, 112, 122, 123, 128, 209, 223, 230, 240, 257) de chaque disque d'épandage (10, 121, 126, 127, 201, 221, 224, 231, 250) sont différents au moins pour le plus grand et le plus court et sont non interchangeables.

11. Epandeur centrifuge d'engrais selon l'une quelconque des revendications précédentes, caractérisé en ce qu'au moins deux palettes d'éjection (203, 222, 225, 232, 251) sont prévues sur chaque disque d'épandage (201, 221, 224, 231, 250) et en ce que pour chaque palette d'éjection (203, 222, 225, 232, 251) pour le réglage de l'angle d'éjection horizontal, il y a des points de marquage (209, 223, 230, 240, 257) sur le disques d'épandage (201, 221, 224, 231, 250) qui sont différents et/ou portent des références différentes et cela de manière que les points de marquage (209, 223, 230, 240, 257) soient associés de manière bi-univoque et sans risque d'interversion à chaque palette d'éjection (203, 222, 225, 232, 251).

12. Epandeur centrifuge d'engrais selon la revendication 11, caractérisé en ce que pour les points de marquage (209, 223, 230, 240, 257) associés à chaque palette d'éjection (203, 222, 225, 232, 251), pour le réglage des palettes d'éjection (203, 222, 225, 232, 251), on choisit d'autres références ou symboles.

13. Epandeur centrifuge d'engrais selon la revendication 5, caractérisé en ce qu'en-dessous de l'échelle (208, 229, 239, 247, 258, 256) et des disques d'épandage (201, 221, 224, 231, 250), il y a des éléments de fixation (215) qui pivotent avec les palettes d'éjection (203, 222, 225, 232, 251).

FIG. 1

FIG.3

FIG.2

EP 0 281 885 B1

FIG. 4

FIG. 5

16

FIG.6

FIG.7

8

23

37

41

35

13

28

40

39

11

16

15

19

12

A

B

14

10

23

A

B

10

EP 0 281 885 B1

17

FIG. 8

FIG. 9

FIG. 10

FIG. 11

FIG. 12

FIG. 13

FIG. 14

EP 0 281 885 B1

FIG. 16

FIG. 15

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

256

257

FIG. 32

256

257

FIG. 33

258   259

A B C D E F G H I

FIG. 34

252

258   259

A B C D E F G H I

FIG. 35

252

256

FIG. 36